# EUROPÄISCHE PATENTSCHRIFT

(11) **EP 0 464 506 B1**
(45) Veröffentlichungstag und Bekanntmachung des Hinweises auf die Patenterteilung: **29.12.1993**
(21) Anmeldenummer: 91110214.3
(22) Anmeldetag: 21.06.1991
(51) Int. Cl.: A23L 2/30, B01D 61/14

(54) **Verfahren und Anlage zur Klärung von Flüssigkeiten**
Process and apparatus to clarify liquids
Procédé et appareil pour clarifier des liquides

(30) Priorität: 04.07.1990 CH 2216/90
(43) Veröffentlichungstag der Anmeldung: 08.01.1992
(73) Patentinhaber: BUCHER-GUYER AG Maschinenfabrik, CH-8166 Niederweningen/Zürich (CH)
(72) Erfinder: Hartmann, Eduard, CH-5425 Schneisingen (CH)

(56) Entgegenhaltungen:
- WO-A-89/02707
- WO-A-89/02708
- WO-A-89/03240
- FR-A- 2 562 392
- GB-A- 2 091 585

## Beschreibung

Die Erfindung betrifft ein Verfahren und eine Anlage zur Klärung von Flüssigkeiten, insbesondere Rohsaft aus pflanzlichen Produkten und biotechnologisch hergestellten Produkten mittels kontinuierlicher Querstromfiltration, insbesondere Mikro- und Ultrafiltration mit einem hohen Feststoffanteil im Retentat-Umwälzkreislauf.

Bei dem aus pflanzlichen Produkten gewonnenen Saft kann es sich sowohl um alkoholische als auch um nichtalkoholische Rohsäfte handeln, wie z.B. Rohsaft aus Obst, Trauben, Beeren oder anderen Früchten und Gemüsen sowie Oelsaaten zur Oelgewinnung. Es kommen auch daraus abgeleitete Produkte aus mehreren pflanzlichen Produkten, z.B. Bier, insbesondere im Zusammenhang mit der Bier-Rückgewinnung aus Fermenter- und Tanklager-Hefe in Betracht.

Durch die WO 89/02708 ist es bekannt, bei der Klärung von Flüssigkeiten mit einem hohen Feststoffanteil im Retentat-Umwälzkreislauf zu fahren. Damit wird das Ziel verfolgt, die Filtrationsleistung der Membranen zu verbessern. Während der Anfahrphase des Produktionsablaufes nimmt der Feststoffanteil im Retentat-Umwälzkreislauf ständig zu. Dabei sinkt die Filtrationsleistung zunächst ab und steigt anschliessend wieder auf einen höheren Wert. Während dieser Anfahrphase wird kein Retentat-Umwälzkreislauf abgeführt. Sobald jedoch der Höchstwert der Filtrationsleistung erreicht ist, wird der Feststoffanteil durch gleichmässiges Abführen von Retentat aus dem Kreislauf während der stationären Betriebsphase konstant gehalten, um dadurch auch die Filtrationsleistung auf dem Endzustand zu halten, der durch eine gegenüber dem Anfangswert wesentlich höhere Filtrationsleistung gekennzeichnet ist. Die Regelung des Retentatabflusses erfolgt dabei in Abhängigkeit von der gemessenen Filtrationsleistung bzw. davon abgeleiteten Grössen.

Bei diesen bekannten Verfahren kann die Anfahrphase unter gewissen Umständen relativ lange dauern. Dies ist der Fall, wenn die Anfangs-Filtrationsleistung der Membranen relativ niedrig ist, oder wenn Zwischenzustände mit relativ niedriger Filtrationsleistung auftreten. Ein weiterer Grund kann darin bestehen, dass nur geringe Feststoff-Anteile im Rohsaft vorliegen, z.B. weniger als 0,5 % des Nasstrubes. Liegen diese Umstände einzeln oder kombiniert vor, so kann die Anfahrphase z.B. über 5 Stunden bis zu 24 Stunden dauern. Bedingt durch die Umwälzung und die damit verbundene mechanische Beanspruchung des Retentates können strukturelle Veränderungen an diesem auftreten mit dem Resultat, dass nach Erreichen der angestrebten hohen Trubkonzentration im Retentat keine Verbesserung der Filtrationsleistung eintritt und die Leistung sogar drastisch absinken kann.

Der Erfindung liegt die Aufgabe zugrunde, die genannten Nachteile zu vermeiden und das eingangs erwähnte Verfahren in wirtschaftlicher Hinsicht noch weiter zu verbessern und die Filtrationsleistung zu erhöhen.

Gemäss der Erfindung wird diese Aufgabe dadurch gelöst, dass während der Anfahrphase wenigstens ein zusätzlicher Retentatabfluss aus dem Retentat-Umwälzkreislauf erfolgt, der im Vergleich zu dem während der stationären Betriebsphase stattfindenden Retentatabfluss relativ gering ist.

Weitere Merkmale und vorteilhafte Ausgestaltungen der Erfindung sind den Patentansprüchen zu entnehmen.

Wie Versuche gezeigt haben, wird mit Hilfe des erfindungsgemässen, zusätzlichen Retentatabflusses während der Anfahrphase trotz der geringen abfliessenden Menge das Retentat im Umwälzkreislauf genügend erneuert, so dass auch in schwierigen Fällen, d.h., wenn die Anfahrphase relativ lange dauert, der Effekt der Filtrationsleistungs-Verbesserung bei hohem Trubanteil im Retentat bei der Filtration von insbesondere Apfelsaft und anderen Fruchtsäften in den meisten Fällen eintritt.

Die Erfindung ist in der folgenden Beschreibung und der Zeichnung, die ein Ausführungsbeispiel darstellt, näher erläutert. Es zeigen
- Fig. 1: eine schematische Darstellung einer einstufigen, kontinuierlichen Querstromfiltrationsanlage zur Durchführung des erfindungsgemässen Verfahrens und
- Fig. 2: die Querstromfiltrationsanlage nach Fig. 1 in zweistufiger Ausführung.

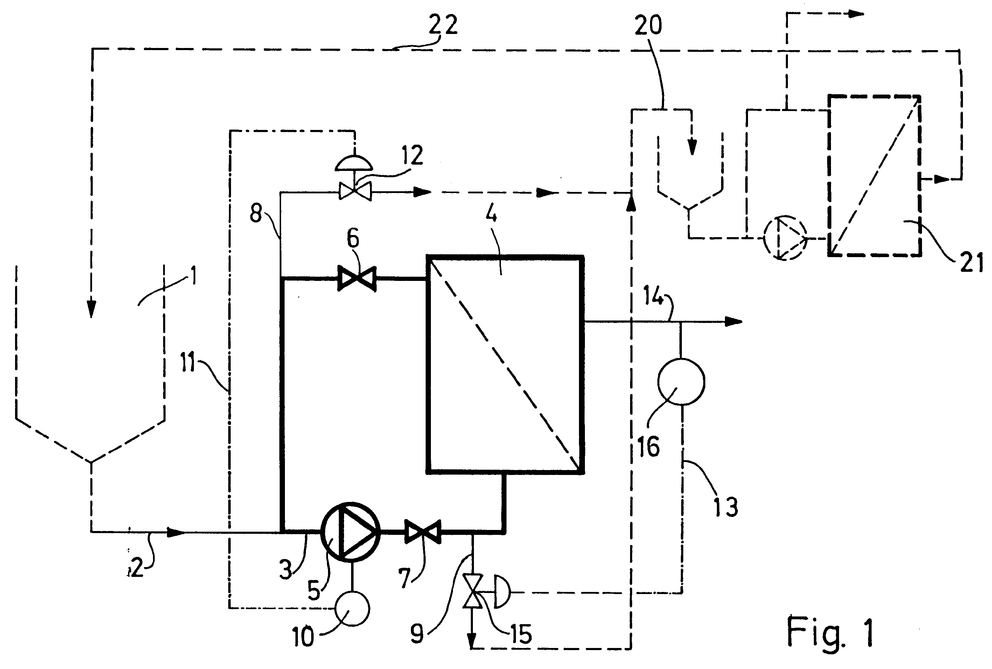

Wie die Fig. 1 zeigt, wird der Rohsaft aus einem Behälter 1 über eine Leitung 2 dem Retentat-Umwälzkreislauf 3 einer einstufigen, kontinuierlich arbeitenden Querstromfiltrationseinrichtung 4 zugeführt, die vorzugsweise als Ultra- oder Mikrofiltrationseinrichtung ausgeführt ist. Im Retentat-Umwälzkreislauf 3 ist eine Umwälzpumpe 5, ein Stufen-Ausgangsventil 6 und ein Stufen-Eingangsventil 7 angeordnet. In Umwälzrichtung gesehen zweigt zwischen Stufen-Ausgangsventil 6 und Umwälzpumpe 5 eine Retentatabflussleitung 8 ab, durch welche während der stationären Betriebsphase ständig Retentat abgeführt wird. Eine weitere Retentatabflussleitung 9 ist zwischen dem Stufen-Eingangsventil 7, das der Umwälzpumpe 5 nachgeschaltet ist, und der Querstromfiltrationseinrichtung 4 angeordnet. Durch die Retentatabflussleitung 9 wird während der Anfahrphase des Produktionsablaufes eine relativ geringe Retentatmenge aus dem Retentat-Umwälzkreislauf 3 abgeführt. Um optimale Betriebsbedingungen zu erhalten, sollte die während der stationären Betriebsphase über die Retentatabflussleitung 8 abgeführte Retentatmenge vorzugsweise mindestens das 10-fache der Retentatmenge betragen, die während der Anfahrphase über die Retentatabflussleitung 9 abgeführt wird. Beispielsweise kann das Verhältnis etwa 30 : 1 sein. Diese relativ geringe Retentatabflussmenge während der Anfahrphase reicht aus, um das Retentat im Retentat-Umwälzkreislauf 3 zu erneuern.

Die Retentatabflussleitungen 8 und 9 sind vorzugsweise für eine getrennte Retentatabführung während der stationären Betriebsphase und der Anfahrphase vorgesehen. Es könnte aber auch eine gemeinsame Retentatabflussleitung für beide Betriebszustände mit unterschiedlichen Abflussmengen verwendet werden, war in den meisten Fällen aber mit Schwierigkeiten bei der Regelung der relativ kleinen Menge während der Anfahrphase verbunden. Die Retentatabflussleitung 9 kann wegen der geringen Retentatabflussmenge ohne Nachteile an jeder Stelle des Retentat-Umwälzkreislaufes 4 angeordnet werden.

Zur Regelung der Retentatabflussmenge während der stationären Betriebsphase wird der Feststoffanteil im Retentat-Umwälzkreislauf 4 vorzugsweise, weil diese Methode am einfachsten ist, über eine feststoffanteilabhängige Grösse gemessen. Wie im Ausführungsbeispiel nach Fig. 1 dargestellt, wird hierzu die Leistungsaufnahme der Umwälzpumpe 5 bei bestimmten konstanten, hydraulischen Betriebsbedingungen, z.B. Drücke, Umwälzmenge, mit Hilfe eines Ampèremeters 10 gemessen und die Messgrösse über eine Steuerleitung 11 zur Regelung eines in der Retentatabflussleitung 8 angeordneten Regelventils 12 verwendet. Wegen der grösseren Menge des abzuführenden Retentats wäre es in vielen Fällen schwierig, eine stabile Regelung zu bekommen, wenn der Retentatabfluss im Bereich der Messstrecke zwischen der Umwälzpumpe 5 und dem Stufen-Ausgangsventil 6 erfolgt.
Deshalb ist die Retentatabflussleitung 8 vorzugsweise im Niederdruckteil des Retentat-Umwälzkreislaufes 3 zwischen Stufen-Ausgangsventil 6 und Umwälzpumpe 5 angeordnet.

Eine weitere Möglichkeit zur Messung des Feststoffanteils im Retentat-Umwälzkreislauf 3 während der stationären Betriebsphase ist die Messung der Druckdifferenz zwischen Modul-Eingang und Modul-Ausgang der Querstromfiltrationseinrichtung 4 bei konstanter Durchflussmenge. Ferner kann als Messgrösse die Durchflussmenge durch ein Modul der Querstromfiltrationseinrichtung 4 bei konstanter Druckdifferenz oder umgekehrt verwendet werden.

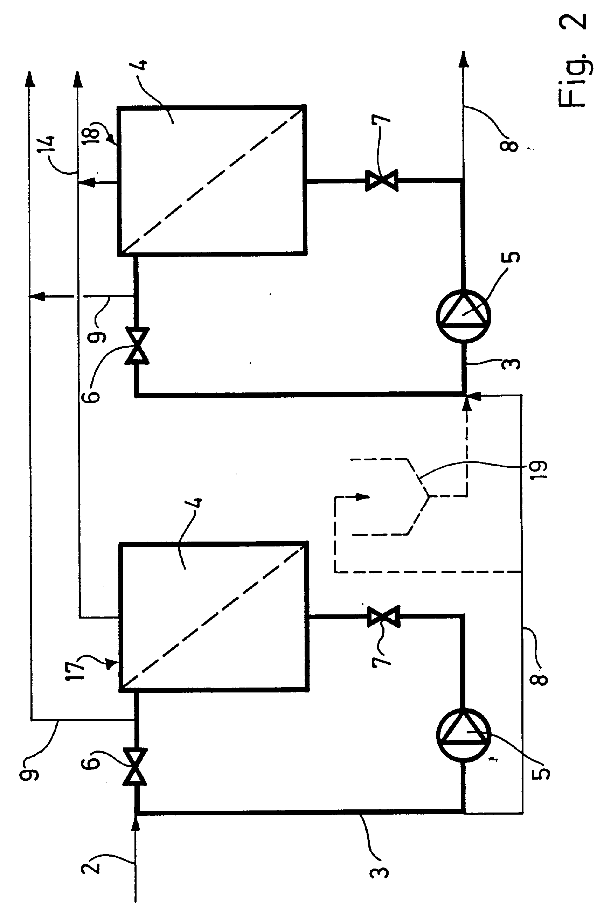

Der Retentatabfluss während der Anfahrphase kann sowohl stationär oder, insbesondere bei sehr kleinen Abflussmengen auch impulsweise erfolgen. Die Regelung der stationär oder impulsweise über die Retentatabflussleitung 9 abfliessenden Retentatmenge während der Anfahrphase erfolgt in Abhängigkeit der Permeat-Leistung F, vorzugsweise der zeitlichen Veränderung der Permeat-Leistung F (Differential dF/dt oder praktisch Differenzenquotient F/ t). Hierzu führt eine Steuerleitung 13 von einer Messstelle 16 bei der Permeatabflussleitung 14 der Querstromfiltrationseinrichtung 4 zu einem in der Retentatabflussleitung 9 angeordneten Regelventil 15. Die in der Steuerleitung 13 sich befindende Messstelle 16 zur Ermittlung der Permeat-Leistung F, dient dem von der abgeleiteten Messgrösse dF/dt beeinflussten Regelventil 15.
Die Querstromfiltrationseinrichtung 4 kann auch mehrstufig ausgeführt sein. Im Ausführungsbeispiel nach Fig. 2 besteht sie aus einer zweistufigen, kontinuierlich arbeitenden Anlage mit den Stufen 17 und 18. Vorzugsweise erfolgen die Retentatabflüsse während der Anfahrphase für jede Stufe getrennt über die jeweiligen Retentatabflussleitungen 9 nach aussen aus dem Gesamtsystem heraus. In einzelnen Fällen ist aber auch eine gemeinsame Führung in die nächst höhere Stufe möglich.

Die Ueberführung des Retentats von der Stufe 17 zur Stufe 18 erfolgt aus den gleichen, regeltechnischen Gründen wie im Ausführungsbeispiel nach Fig. 1 jeweils von Niederdruckseite zur Niederdruckseite der einzelnen Retentat-Umwälzkreisläufe 4. Die nächstfolgende Stufe, im Ausführungsbeispiel nach Fig. 2 die Stufe 18, wird deshalb vorzugsweise wenigstens niederdruckseitig mit einem etwas niedrigeren Druck als die vorhergehende Stufe betrieben, um gegebenenfalls, sofern die Ueberführung nicht mittels einer Dosierpumpe erfolgt, dadurch eine Förderpumpe einsparen zu können. Eine andere Alternative ist das Zwischenschalten eines kleinen, drucklosen Puffertankes 19 zwischen den einzelnen Stufen 17 und 18 (gestrichelt dargestellte Alternative in Fig. 2).

Die mehrstufige Querstromfiltration ist praktisch nur dann sinnvoll, wenn zur Erzielung einer sehr hohen Ausbeute auf extrem hohe Feststoffanteile gefahren werden soll. Zweckmässigerweise werden die höheren Stufen mit Modulen bestückt, die wesentlich vergrösserte Kanäle aufweisen und/oder für den Betrieb bei höheren Drücken geeignet sind, z.B. durch Verwendung von Metallmembranen.

Eine effizientere Alternative zur mehrstufigen Filtration stellt die Parallelfiltration dar. Diese Lösung ist in Fig. 1 als alternatives Ausführungsbeispiel gestrichelt dargestellt. Die über die Retentatabflussleitungen 8 und 9 abgeführten Retentatströme können über eine gemeinsame Leitung 20 einer Recycling-Querstromfiltrationseinrichtung 21 mit einer sehr hohen Trubkonzentration zugeführt werden. Damit lässt sich gleichzeitig auch das wesentlich dünnflüssigere Retentat aus der Anfahrphase mit aufkonzentrieren und somit die Gesamtausbeute verbessern. Das Permeat der Recycling-Querstromfiltrationseinrichtung 21 kann über eine Leitung 22 in den Behälter 1 zurückgeleitet werden.

Sowohl im Ausführungsbeispiel nach Fig. 1 als auch im Ausführungsbeispiel nach Fig. 2 weisen die getrennten Retentatabflussleitungen 8 und 9 für die stationäre Betriebsphase und die Anfahrphase eine unterschiedliche Dimensionierung auf. Das Verhältnis der Leitungsquerschnitte für den Retentatabfluss während der stationären Phase und der Anfahrphase beträgt vorzugsweise mindestens 10 : 1. Bspw. kann der Leitungsquerschnitt der Retentatabflussleitung 8 das 30-fache des Leitungsquerschnitts der Retentatabflussleitung 9 betragen.

Der Retentatabfluss aus der Retentatabflussleitung 9 für die Anfahrphase erfolgt automatisch unter Verwendung von Einrichtungen, die für die Abführung relativ kleiner Mengen besonders geeignet sind, wie z.B. Dosierpumpen, insbesondere Membran-Dosierpumen, impulsgesteuerte Ventile etc. Die Ansteuerung dieser Stellorgane geschieht über einen Regler. Als Messgrösse dient vorzugsweise die Permeatleistung, resp. das Differential nach der Zeit davon, resp. der Differenzenquotient. In einfachen Fällen genügt jedoch auch die Ausschleusung einer konstanten, geringen Menge von Retentat, die gegenbenenfalls von Hand nachreguliert wird.

## Patentansprüche

1. Verfahren zur Klärung von Flüssigkeiten, insbesondere Rohsaft aus pflanzlichen Produkten und biotechnologisch hergestellten Produkten, mittels kontinuierlicher Querstromfiltration, insbesondere Mikro- und Ultrafiltration mit einem hohen Feststoffanteil im Retentat-Umwälzkreislauf, dadurch gekennzeichnet, dass während der Anfahrphase wenigstens ein zusätzlicher Retentatabfluss aus dem Retentat-Umwälzkreislauf erfolgt, der im Vergleich zu dem während der stationären Betriebsphase stattfindenden Retentabfluss relativ gering ist.

2. Verfahren nach Anspruch 1, dadurch gekennzeichnet, dass das Verhältnis von Retentatabfluss während der stationären Betriebsphase zu Retentatabfluss während der Anfahrphase vorzugsweise grösser als 10, z.B. 30 ist.

3. Verfahren nach einem der Ansprüche 1 und 2, dadurch gekennzeichnet, dass für die Anfahrphase und die stationäre Betriebsphase vorzugsweise jeweils ein separater Retentatabfluss vorgesehen ist.

4. Verfahren nach einem der Ansprüche 1 bis 3, dadurch gekennzeichnet, dass der Retentatabfluss während der Anfahrphase an jeder Stelle im Retentat-Umwälzkreislauf erfolgen kann.

5. Verfahren nach einem der Ansprüche 1 bis 4, dadurch gekennzeichnet, dass der Retentatabfluss während der stationären Betriebsphase vorzugsweise im Niederdruckteil des Retentat-Umwälzkreislaufes erfolgt.

6. Verfahren nach einem der Ansprüche 1 bis 5, dadurch gekennzeichnet, dass die Regelung der stationär oder impulsweise abgeführten Retentatmenge während der Anfahrphase in Abhängigkeit der Permeat-Leistung erfolgt.

7. Verfahren nach einem der Ansprüche 1 bis 6, dadurch gekennzeichnet, dass die Regelung der stationär oder impulsweise abgeführten Retentatmenge während der Anfahrphase vorzugsweise in Abhängigkeit der zeitlichen Veränderung der Permeat-Leistung erfolgt.

8. Verfahren nach einem der Ansprüche 1 bis 7, dadurch gekennzeichnet, dass die kontinuierliche Querstromfiltrationseinrichtung ein- oder mehrstufig ausgeführt ist.

9. Verfahren nach einem der Ansprüche 1 bis 8, dadurch gekennzeichnet, dass bei mehrstufigen Systemen vorzugsweise alle Retentatabflüsse während der Anfahrphase aus den einzelnen Stufen nach aussen abgeführt werden.

10. Verfahren nach einem der Ansprüche 1 bis 9, dadurch gekennzeichnet, dass die Ueberführung von Retentat bei mehrstufigen Systemen von einer Stufe zur nächsten Stufe jeweils von Niederdruck-Seite zu Niederdruck-Seite der einzlenen Retentat-Umwälzkreisläufe erfolgt.

11. Verfahren nach Anspruch 10, dadurch gekennzeichnet, dass die nächstfolgende Stufe vorzugsweise wenigstens niederdruckseitig mit einem etwas niedrigeren Druck als die vorhergehende Stufe betrieben wird.

12. Verfahren nach Anspruch 10 oder 11, dadurch gekennzeichnet, dass zwischen den einzelnen Stufen ein relativ kleiner, druckloser Puffertank angeordnet ist.

13. Verfahren nach einem der Ansprüche 10 bis 12, dadurch gekennzeichnet, dass die höheren Stufen mit Modulen bestückt werden, die wesentlich vergrösserte Kanäle aufweisen und/oder für höhere Betriebsdrücke geeignet sind, z.B. Metall-Membranen.

14. Verfahren nach einem der Ansprüche 1 bis 13, dadurch gekennzeichnet, dass als Alternative zur mehrstufigen Filtration wenigstens eine Parallel-Filtration durchgeführt wird.

15. Anlage zur Durchführung des Verfahrens nach einem der Ansprüche 1 bis 14, dadurch gekennzeichnet, dass die für die Anfahrphase und die stationäre Betriebsphase vorgesehenen Retentatabflussleitungen unterschiedliche Dimensionen aufweisen.

16. Anlage nach Anspruch 15, dadurch gekennzeichnet, dass das Verhältnis der Leitungsquerschnitte von Retentatabflussleitung der stationären Betriebsphase zu Retentatabflussleitung der Anfahrphase grösser als 10, z.B. 30 ist.

17. Anlage nach einem der Ansprüche 1 bis 16, dadurch gekennzeichnet, dass der Retentatabfluss aus der Leitung für die Anfahrphase automatisch mittels Dosierpumpe, insbesondere Membrandosierpumpe, impulsgesteuerte Ventile oder andere, für die Abführung relativ kleiner Flüssigkeitsmengen geeignete Stellorgane erfolgt.

18. Anlage nach Anspruch 17, dadurch gekennzeichnet, dass die Ansteuerung der Stellorgane zur Abführung des Retentats über einen Regler erfolgt, wobei als Messgrösse vorzugsweise die Permeat-Leistung oder das davon abgeleitete Differential nach der Zeit bzw. der entsprechende Differenzenquotient davon dient.

## Claims

1. Process for clarifying liquids, especially raw juice from vegetable products and biotechnological products by means of continuous cross-flow filtration, especially micro- and ultrafiltration with a high solids content in the residue circuit, characterised in that there is at least one additional residue discharge from the residue circuit during the start-up phase, this being relatively small compared to the residue discharge taking place during steady-state operation.

2. Process according to claim 1, characterised in that the ratio of residue discharge during steady-state operation to residue discharge during the start-up phase is preferably greater than 10, e.g. 30.

3. Process according to either of claims 1 and 2, characterised in that a separate residue discharge is preferably provided for the start-up phase and steady-state operation.

4. Process according to one of claims 1 to 3, characterised in that the residue discharge during the start-up phase can be effected at any point in the residue circuit.

5. Process according to one of claims 1 to 4, characterised in that the residue discharge during steady-state operation is preferably effected in the low-pressure part of the residue circuit.

6. Process according to one of claims 1 to 5, characterised in that the regulation of the quantity of residue discharged in a constant or pulsed manner during the start-up phase is effected as a function of the permeate output.

7. Process according to one of claims 1 to 6, characterised in that the regulation of the quantity of residue discharged in a constant or pulsed manner during the start-up phase is preferably effected as a function of the variation over time of the permeate output.

8. Process according to one of claims 1 to 7, characterised in that the continuous cross-flow filtration device is designed with one or several stages.

9. Process according to one of claims 1 to 8, characterised in that, in the case of multi-stage systems, preferably all of the residue discharges during the start-up phase are discharged from the individual stages towards the outside.

10. Process according to one of claims 1 to 9, characterised in that the transfer of residue in multi-stage systems from one stage to the next stage is effected from the low-pressure side to the low-pressure side of the individual residue circuits.

11. Process according to claim 10, characterised in that the next stage is preferably operated at least at the low-pressure side at a slightly lower pressure than the preceding stage.

12. Process according to claim 10 or claim 11, characterised in that a relatively small pressureless buffer tank is arranged between the individual stages.

13. Process according to one of claims 10 to 12, characterised in that the higher stages are provided with modules which have substantially enlarged channels and/or are suitable for higher operating pressures, e.g. metal membranes.

14. Process according to one of claims 1 to 13, characterised in that at least one parallel filtration process is carried out as an alternative to multi-stage filtration.

15. Apparatus for carrying out the process according to one of claims 1 to 14, characterised in that the residue discharge lines provided for the start-up phase and steady-state operation have different dimensions.

16. Apparatus according to claim 15, characterised in that the ratio of the line cross sections of the residue discharge line of steady-state operation to the residue discharge line of the start-up phase is greater than 10, e.g. 30.

17. Apparatus according to one of claims 1 to 16, characterised in that the residue discharge from the line for the start-up phase is effected automatically by means of a metering pump, especially a membrane metering pump, pulse-controlled valves or other control means suitable for the discharge of relatively small quantities of liquid.

18. Apparatus according to claim 17, characterised in that the control of the control means for discharging the residue is effected via a control unit, the permeate output or the time differential derived therefrom or the corresponding differential quotient thereof preferably serving as a measured variable.

## Revendications

1. Procédé pour clarifier des liquides, notamment du jus brut de produits végétaux et de produits issus de la biotechnologie, au moyen de la filtration continue à courant transversal, notamment de la microfiltration et de l'ultrafiltration avec une teneur élevée en matières solides dans le circuit de circulation du rétentat, caractérisé en ce qu'au cours de la phase initiale, il se produit au moins un écoulement supplémentaire de rétentat du circuit de circulation du rétentat, qui, comparé à l'écoulement de rétentat qui se produit pendant la phase de fonctionnement stationnaire, est relativement faible.

2. Procédé selon la revendication 1, caractérisé en ce que le rapport entre l'écoulement de rétentat pendant la phase de fonctionnement stationnaire et l'écoulement de rétentat pendant la phase initiale est, de préférence, supérieur à 10, par ex. de 30.

3. Procédé selon la revendication 1 ou 2, caractérisé en ce qu'un écoulement séparé est chaque fois prévu pour la phase initiale et la phase de fonctionnement stationnaire.

4. Procédé selon l'une des revendications 1 à 3, caractérisé en ce que l'écoulement de rétentat pendant la phase initiale peut se produire à n'importe quel point du circuit de circulation du rétentat.

5. Procédé selon l'une des revendications 1 à 4, caractérisé en ce que l'écoulement de rétentat pendant la phase de fonctionnement stationnaire se fait, de préférence, dans la partie basse pression du circuit de circulation du rétentat.

6. Procédé selon l'une des revendications 1 à 5, caractérisé en ce que la régulation de la quantité de rétentat évacuée de façon continue ou par impulsions pendant la phase initiale se fait en fonction du débit de perméat.

7. Procédé selon l'une des revendications 1 à 6, caractérisé en ce que la régulation de la quantité de rétentat évacuée de façon continue ou par impulsions pendant la phase initiale se fait, de préférence, en fonction des variations dans le temps du débit de perméat.

8. Procédé selon l'une des revendications 1 à 7, caractérisé en ce que le dispositif de filtration continue à courant transversal est réalisé à un ou à plusieurs étages.

9. Procédé selon l'une des revendications 1 à 8, caractérisé en ce que, dans le cas des systèmes à plusieurs étages, tous les écoulements de rétentat pendant la phase initiale sont évacués vers l'extérieur à partir des différents étages.

10. Procédé selon l'une des revendications 1 à 9, caractérisé en ce que, dans le cas des systèmes à plusieurs étages, le transfert de rétentat d'un étage à l'étage suivant se fait chaque fois du côté de la basse pression vers le côté de la basse pression des différents circuits de circulation du rétentat.

11. Procédé selon la revendication 10, caractérisé en ce que l'étage suivant fonctionne, de préférence au moins du côté de la basse pression, avec une pression quelque peu inférieure à celle de l'étage précédent.

12. Procédé selon la revendication 10 ou 11, caractérisé en ce qu'est disposée entre les différents étages une cuve tampon relativement petite et exempte de pression.

13. Procédé selon l'une des revendications 10 à 12, caractérisé en ce que les étages supérieurs sont équipés de modules, par exemple de membranes métalliques, qui présentent des canaux sensiblement plus grands et/ou qui sont appropriés pour des pressions de fonctionnement plus élevées.

14. Procédé selon l'une des revendications 1 à 13, caractérisé en ce qu'à la place d'une filtration à plusieurs étages est réalisée au moins une filtration parallèle.

15. Appareil pour mettre en oeuvre le procédé selon l'une des revendications 1 à 14, caractérisé en ce que les conduites d'écoulement du rétentat prévues pour la phase initiale et la phase de fonctionnement stationnaire présentent différentes dimensions.

16. Appareil selon la revendication 15, caractérisé en ce que le rapport entre la section de la conduite d'écoulement du rétentat de la phase de fonctionnement stationnaire et la section de la conduite d'écoulement du rétentat de la phase initiale est supérieur à 10 et est, par exemple, de 30.

17. Appareil selon l'une des revendications 1 à 16, caractérisé en ce que le rétentat s'écoule automatiquement par la conduite pour la phase initiale au moyen d'une pompe de dosage, notamment d'une pompe de dosage à membrane, de soupapes commandées par impulsions ou d'autres organes de réglage adaptés pour évacuer des quantités de liquide relativement faibles.

18. Appareil selon la revendication 17, caractérisé en ce que les organes de réglage sont actionnés pour évacuer le rétentat par l'intermédiaire d'un régulateur, sachant que le débit de perméat ou la dérivée de ce débit de perméat en fonction du temps ou leur quotient différentiel sert, de préférence, de grandeur mesurée.
